# EUROPÄISCHE PATENTSCHRIFT

(11) **EP 4 566 566 B1**
(45) Veröffentlichungstag und Bekanntmachung des Hinweises auf die Patenterteilung: **22.07.2026**
(21) Anmeldenummer: 24205394.0
(22) Anmeldetag: 08.10.2024
(51) Int. Cl.: A61C 8/00

(54) **IMPLANTATBOHRER UND IMPLANTATBOHRER-SATZ**
IMPLANT DRILL AND IMPLANT DRILL SET
FORET D'IMPLANT ET ENSEMBLE DE FORET D'IMPLANT

(30) Priorität: 04.12.2023 DE 102023133853
(43) Veröffentlichungstag der Anmeldung: 11.06.2025
(73) Patentinhaber: Dentaurum GmbH & Co. Kg, 75228 Ispringen (DE)
(72) Erfinder: PACE, Mark Stephen, 75228 Ispringen (DE); BAUER, Andreas, 75228 Ispringen (DE)
(74) Vertreter: Hoeger, Stellrecht & Partner Patentanwälte mbB

(56) Entgegenhaltungen:
- DE-A1- 102021 107 077

## Beschreibung

Die vorliegende Erfindung betrifft einen Implantatbohrer zur Erzeugung von Bohrungen in Kieferknochen für Dentalimplantate.

Die Erfindung betrifft ferner einen Implantatbohrer-Satz, umfassend einen derartigen Implantatbohrer.

Dentalimplantate, die als Träger für Zahnersatz dienen, werden in den Kieferknochen eingesetzt, in der Regel eingeschraubt. Hierfür muss der Kieferknochen durch Erzeugung einer Bohrung präpariert werden, deren Größe und Gestalt möglichst exakt mit dem einzusetzenden Implantat korreliert. Für jedes Dentalimplantat werden normalerweise mehrere Implantatbohrer benötigt, um nacheinander verschiedene Abschnitte der Bohrung mit unterschiedlichen Durchmessern erzeugen zu können.

Die aus dem Stand der Technik bekannten Implantatbohrer sind normalerweise einstückig ausgebildet und umfassen eine Bohrklinge und einen Betätigungsabschnitt zur Verbindung mit einem Handinstrument, mit dem der Implantatbohrer betätigt wird. Diese Implantatbohrer sind zur mehrmaligen Verwendung bestimmt, wobei für jedes Dentalimplantat ein bestimmter Bohrer (oder ein Satz von Bohrern) benötigt wird. Die Implantatbohrer bestehen einheitlich aus einem Material mit der für die Bohrklinge erforderlichen Härte, in der Regel hochfester Edelstahl oder Keramik, wobei die Herstellung der Bohrer aufgrund der unterschiedlichen Abschnitte mit ihren jeweiligen Geometrien relativ aufwändig ist.

Die DE 10 2021 107077 A1 offenbart einen Bohrer für den Alveolarknochen, der einen Hauptkörper und einen Auffangdeckel umfasst. Der Hauptkörper weist eine erste Schneidplatte und eine zweite Schneidplatte auf, die durch Stanzen hergestellt, kreuzartig versetzt ineinander gesteckt und miteinander verschweißt sind, sodass sie einen Bohrereinsatz bilden, an dessen Unterende eine Bohrerspitze ausgebildet ist und dessen Oberende mit einem Bohrerschaft verbunden ist.

Der Erfindung liegt die Aufgabe zugrunde, einen Implantatbohrer und einen Implantatbohrer-Satz vorzuschlagen, die mit einem verringerten Aufwand hergestellt und flexibel eingesetzt werden können.

Diese Aufgabe wird erfindungsgemäß gelöst durch einen Implantatbohrer gemäß Anspruch 1.

Der Erfindung liegt somit die prinzipielle Idee zugrunde, dass Bohrklingenelement und die Haltevorrichtung als zwei separate Teile herzustellen, die über einen einfachen Mechanismus formschlüssig miteinander verbindbar sind. Daraus resultiert als erster wesentlicher Vorteil der Erfindung, dass nur eine oder wenige standardisierte Haltevorrichtungen mit einer Vielzahl von unterschiedlichen Bohrklingenelementen (die an die jeweiligen Dentalimplantate angepasst sind) zu einem Implantatbohrer kombiniert werden können. Die Haltevorrichtung kann somit in einer entsprechend großen Stückzahl kostengünstig hergestellt werden.

Ein zweiter wesentlicher Vorteil ergibt sich aus der Tatsache, dass bei dem erfindungsgemäßen Implantatbohrer nur das Bohrklingenelement aus einem hochfesten Material hergestellt sein muss, während für die Haltevorrichtung ein kostengünstigeres Material (z.B. einfacher Edelstahl) eingesetzt werden kann. Im Gegensatz dazu müssen einstückige Implantatbohrer vollständig aus einem hochfesten Werkstoff bestehen, was zu erhöhten Kosten führt.

Bei einer bevorzugten Ausführungsform des erfindungsgemäßen Implantatbohrers weist der Halteabschnitt der Haltevorrichtung eine zylindrische Außenfläche auf, die zur Aufnahme in einer Bohrhülse mit einer korrespondierenden zylindrischen Innenfläche dient. Die Bohrhülse befindet sich in einer Schablone, die auf dem Gebiss des Patienten aufsitzt, sodass mit Hilfe der Bohrhülse die Position und Orientierung der Bohrung exakt festgelegt werden kann. Durch die im Wesentlichen rotationssymmetrische Gestalt kann die Haltevorrichtung günstigerweise durch ein materialabtragendes Verfahren wie z.B. Drehen hergestellt werden, was die Herstellungskosten verringert. Vorzugsweise ist die Haltevorrichtung aus Edelstahl gebildet.

Das Bohrklingenelement des erfindungsgemäßen Implantatbohrers besteht aus einem Flachmaterial, dessen Kanten im Bereich des Klingenabschnitts abgeschrägt sind. Ein derartiges Bohrklingenelement hat ebenfalls den Vorteil, dass es auf einfache Weise mit der jeweils benötigten Größe und Geometrie herstellbar ist.

Vorzugsweise ist das Bohrklingenelement einstückig aus einem keramischen Material oder aus einem metallischen Material gebildet, insbesondere aus hochfestem Edelstahl oder Chirurgenstahl.

Günstigerweise ist das Bohrklingenelement mittels Erodieren hergestellt, insbesondere mittels Funkenerodieren. Bei diesem Herstellungsverfahren kann in einem einzigen Arbeitsschritt das Bohrklingenelement aus einem größeren Flächenmaterial ausgeschnitten und gleichzeitig im Klingenabschnitt mit abgeschrägten Kante als Bohrklinge versehen werden. Die abgeschrägten Kanten weisen typischerweise einen Winkel im Bereich von 12° bis 18° zur Dickenrichtung des Bohrklingenelements auf, beispielsweise von 15°.

Das Bohrklingenelement weist vorzugsweise eine im Wesentlichen konstante Dicke auf, die bevorzugt im Bereich von ca. 0,25 bis ca. 0,8 mm liegt, weiter bevorzugt von ca. 0,5 bis 0,7 mm. Allerdings kann das Bohrklingenelement im Bereich der Spitze des Klingenabschnitts auch eine verringerte Dicke aufweisen.

In dem Halteabschnitt des erfindungsgemäßen Implantatbohrers weisen die Aufnahmeflächen der schlitzförmigen Aufnahme bevorzugt einen Abstand auf, welcher der Dicke des Bohrklingenelements entspricht, um den Verbindungsabschnitt des Bohrklingenelements im Wesentlichen spielfrei aufzunehmen. Auf diese Weise wird eine sichere und präzise Übertragung des Drehmoments von der Haltevorrichtung auf das Bohrklingenelement gewährleistet, wenn die Bohrung im Knochen erzeugt wird.

Der Betätigungsabschnitt der Haltevorrichtung ist vorzugsweise zur drehfesten, lösbaren Verbindung mit einem Handgriff ausgebildet. Diese Art der Verbindungsmöglichkeit mit einem Handgriff ist von Implantatbohrern aus dem Stand der Technik bekannt.

Gemäß der Erfindung ist das Bohrklingenelement mittels einer Rast- oder Schnappverbindung lösbar mit der Haltevorrichtung verbindbar. In diesem Fall kann die Haltevorrichtung, die nicht direkt mit dem Körper des Patienten in Berührung kommt, ggf. mehrfach verwendet werden, wodurch weitere Kostenvorteile erzielt werden können. Zumindest kann eine Haltevorrichtung bei der Erzeugung einer Bohrung nacheinander mit zwei oder mehr Bohrklingenelementen verbunden und eingesetzt werden, um die verschiedenen Abschnitte der Bohrung zu erzeugen und/oder aufzuweiten.

Gemäß einer vorteilhaften Ausführungsform weist der Verbindungsabschnitt des Klingenelements einen zentralen Führungsabschnitt und zwei seitliche, von dem Führungsabschnitt beabstandete Flügelabschnitte auf, wobei die Flügelabschnitte jeweils eine zur Drehachse orientierte Rastnase aufweisen, wobei sich die schlitzförmige Aufnahme nicht über den gesamten Durchmesser des Halteabschnitts erstreckt, sondern eine Breite aufweist, die im Wesentlichen der Breite des zentralen Führungsabschnitts entspricht, und wobei der Halteabschnitt an seinem Außenumfang zwei gegenüber liegende Aussparungen zur Aufnahme der Rastnasen aufweist. Beim Einführen des Bohrklingenelements in die Haltevorrichtung kommt es dann zu einer Verriegelung durch die Rastnasen, so dass das lösbar mit der Haltevorrichtung verbundene Bohrklingenelement insbesondere gegen eine axiale oder radiale Bewegung gesichert ist. Günstigerweise kann die verriegelte Verbindung mit Hilfe eines Entriegelungswerkzeugs auf einfache Weise wieder gelöst werden. Hierfür ist es bevorzugt, wenn der Halteabschnitt angrenzend an die Aussparungen jeweils eine Anlagefläche für ein Entriegelungswerkzeug aufweist, um die seitlichen Flügelabschnitte auseinander zu bewegen und die Verbindung zwischen dem Bohrklingenelement und der Haltevorrichtung zu lösen.

Die Haltevorrichtung weist bevorzugt eine Reinigungsbohrung auf, die das in Richtung des Betätigungsabschnitts weisende Ende der schlitzförmigen Aufnahme mit dem Außenumfang des Halteabschnitts verbindet. Im Fall der Wiederverwendung der Haltevorrichtung kann dadurch eine effektive Durchspülung der schlitzförmigen Aufnahme beim Reinigen der Haltevorrichtung sichergestellt werden.

Gegenstand der vorliegenden Erfindung ist auch ein Implantatbohrer-Satz, umfassend einen erfindungsgemäßen Implantatbohrer mit einer lösbaren Verbindung zwischen dem Bohrklingenelement und der Haltevorrichtung, sowie ein oder mehrere weitere Bohrklingenelemente, wobei jedes Bohrklingenelement einen Verbindungsabschnitt aufweist, der in Axialrichtung in die Aufnahme des Halteabschnitts der Haltevorrichtung einführbar ist, um das Bohrklingenelement drehfest mit der Haltevorrichtung zu verbinden.

Bei dem erfindungsgemäßen Implantatbohrer-Satz genügt die Bereitstellung einer einzigen Haltevorrichtung, die lediglich im Hinblick auf den Außendurchmesser des Halteabschnitts in Bezug auf eine zu verwendende Bohrhülse angepasst sein muss. Die Haltevorrichtung kann mit einer Reihe verschiedener Bohrklingenelemente in dem Satz kombiniert werden, sowohl zur Erzeugung einer einzigen Bohrung im Kieferknochen mit verschiedenen Abschnitten als auch zur Erzeugung mehrerer Bohrungen nach einer entsprechenden Reinigung der Haltevorrichtung. Im Vergleich zu einer Serie von Implantatbohrern, die jeweils einstückig aus einem Bohrklingenelement und einer Haltevorrichtung bestehen, ermöglicht der erfindungsgemäße Satz eine erhebliche Material- und Kostenersparnis.

Innerhalb des erfindungsgemäßen Implantatbohrer-Satzes sind die Verbindungsabschnitte aller Bohrklingenelemente bevorzugt gleich ausgebildet, während die Klingenabschnitte der Bohrklingenelemente jeweils gleich oder verschieden ausgebildet sein können.

Die Klingenabschnitte der Bohrklingenelemente können insbesondere verschieden ausgebildet sein, um nacheinander verschiedene Teilbereiche einer Bohrung im Kieferknochen zu erzeugen und/oder aufzuweiten.

Diese und weitere Vorteile der Erfindung werden anhand der nachfolgenden Ausführungsbeispiele unter Bezugnahme auf die Figuren näher erläutert.

Es zeigen im Einzelnen:
- Figur 1:: Eine Haltevorrichtung gemäß einem ersten, nicht erfindungsgemäßen Ausführungsbeispiel eines Implantatbohrers in einer Seitenansicht (Fig. 1A), einer perspektivischen Ansicht (Fig. 1B) und einer Draufsicht (Fig. 1C);
- Figur 2:: ein Bohrklingenelement gemäß dem ersten Ausführungsbeispiel in einer Seitenansicht (Fig. 2A), einer perspektivischen Ansicht (Fig. 2B) und einer Draufsicht (Fig. 2C);
- Figur 3:: einen Implantatbohrer gemäß dem ersten Ausführungsbeispiel in einer Seitenansicht (Fig. 3A), einer perspektivischen Ansicht (Fig. 3B), einer Draufsicht (Fig. 3C) und einem Längsschnitt (Fig. 3D);
- Figur 4:: eine Haltevorrichtung gemäß einem zweiten, nicht erfindungsgemäßen Ausführungsbeispiel eines Implantatbohrers in einer Seitenansicht (Fig. 4A), einer perspektivischen Ansicht (Fig. 4B) und einer Draufsicht (Fig. 4C);
- Figur 5:: ein Bohrklingenelement gemäß dem zweiten Ausführungsbeispiel in einer Seitenansicht (Fig. 5A), perspektivischen Ansicht (Fig. 5B) und einer Draufsicht (Fig. 5C);
- Figur 6:: einen Implantatbohrer gemäß dem zweiten Ausführungsbeispiel in einer Seitenansicht (Fig. 6A), einer perspektivischen Ansicht (Fig. 6B), einer Draufsicht (Fig. 6C) und einem Längsschnitt (Fig. 6D);
- Figur 7:: eine Haltevorrichtung gemäß einem dritten Ausführungsbeispiel eines erfindungsgemäßen Implantatbohrers in einer Seitenansicht (Fig. 7A), einer perspektivischen Ansicht (Fig. 7B) und einer Draufsicht (Fig. 7C);
- Figur 8:: ein Bohrklingenelement gemäß dem dritten Ausführungsbeispiel in einer Seitenansicht (Fig. 8A), einer perspektivischen Ansicht (Fig. 8B) und einer Draufsicht (Fig. 8C); und
- Figur 9:: einen Implantatbohrer gemäß dem dritten Ausführungsbeispiel in einer Seitenansicht (Fig. 9A), einer perspektivischen Ansicht (Fig. 9B), einer Draufsicht (Fig. 9C) und einem Längsschnitt (Fig. 9D).

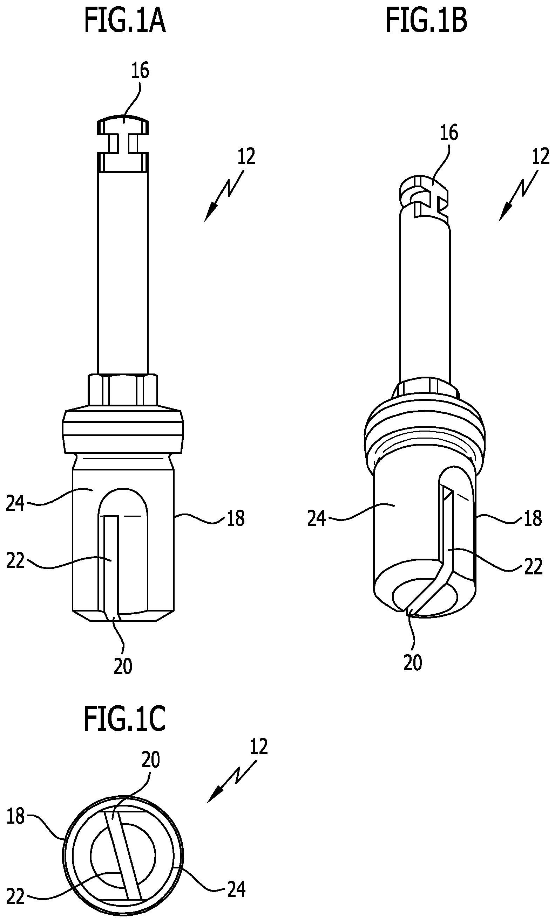

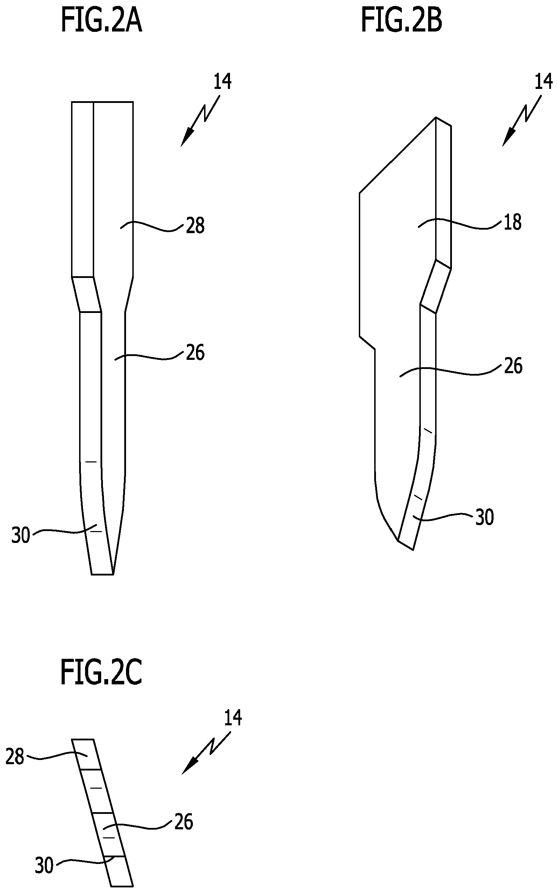

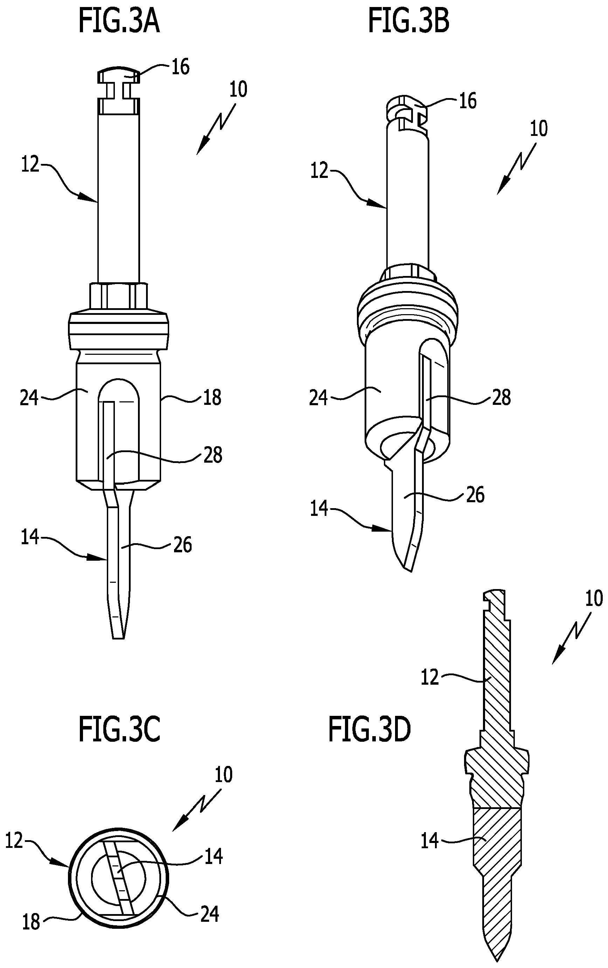

Ein erstes, nicht erfindungsgemäßes Ausführungsbeispiel eines Implantatbohrers 10 zur Erzeugung von Bohrungen im Kieferknochen für Dentalimplantate ist in den Figuren 1A bis 3D dargestellt. Hierbei zeigen die Figuren 1A bis 1C lediglich die Haltevorrichtung 12, die Figuren 2A bis 2C zeigen lediglich das Bohrklingenelement 14 und die Figuren 3A bis 3C zeigen den Implantatbohrer 10 umfassend das Bohrklingenelement 14 und die Haltevorrichtung 12, jeweils in einer Seitenansicht, einer perspektivischen Ansicht und einer Draufsicht von unten. Figur 3D zeigt einen Längsschnitt durch den Implantatbohrer 10.

Die Haltevorrichtung 12 ist im Wesentlichen rotationssymmetrisch in Bezug auf eine Drehachse ausgebildet, die sich in den Seitenansichten und perspektivischen Ansichten von oben nach unten erstreckt. Die Haltevorrichtung 12 umfasst an ihrem oberen Ende einen Betätigungsabschnitt 16, über den der Implantatbohrer 10 mit einem Handgriff (in den Figuren nicht dargestellt) verbunden werden kann. Über diesen Handgriff bzw. Handinstrument wird der Implantatbohrer 10 betätigt.

An ihrem unteren Ende umfasst die Haltevorrichtung 12 einen Halteabschnitt 18 zur Verbindung mit dem Bohrklingenelement 14. Der Halteabschnitt 18 weist eine schlitzförmige Aufnahme 20 mit zwei zueinander parallelen Aufnahmeflächen 22 auf.

Im Bereich des Halteabschnitts 18 weist die Haltevorrichtung 12 eine zylindrische Außenfläche 24 auf. Diese dient insbesondere zur Aufnahme des Implantatbohrers 10 in einer Bohrhülse (in den Figuren nicht dargestellt) mit einer korrespondierenden zylindrischen Innenfläche.

Das Bohrklingenelement 14 ist im Wesentlichen spiegelsymmetrisch in Bezug auf die Drehachse der Haltevorrichtung 12 ausgebildet. Es umfasst im unteren Bereich einen Klingenabschnitt 26 zur Erzeugung der Bohrung im Kieferknochen und im oberen Bereich einen Verbindungsabschnitt 28 zur Verbindung mit dem Halteabschnitt 18 der Haltevorrichtung 12. Das Bohrklingenelement 14 ist aus einem Flachmaterial hergestellt, beispielsweise mit einer Dicke im Bereich von ca. 0,5 bis ca. 0,7 mm, und weist mindestens im Klingenabschnitt 26 abgeschrägte Kanten 30 auf (beispielsweise mit einem Winkel von ca. 15° zur Dickenrichtung des Bohrklingenelements 14). Das Bohrklingenelement 14 gemäß diesem ersten, nicht erfindungsgemäßen Ausführungsbeispiel des Implantatbohrers besteht aus einem hochfesten Edelstahl, insbesondere aus Chirurgenstahl, und kann vorteilhafterweise mittels Funkenerodieren hergestellt werden.

Für die Haltevorrichtung 12 des Implantatbohrers 10 kann ein Edelstahl mit einer im Vergleich zum Bohrklingenelement 14 geringeren Festigkeit eingesetzt werden, wodurch eine Kostenersparnis im Vergleich zu einem einstückigen Implantatbohrer realisiert werden kann.

Der Verbindungsabschnitt 28 des Bohrklingenelements 14 ist in Axialrichtung in die schlitzförmige Aufnahme 20 im Halteabschnitt 18 der Haltevorrichtung 12 einführbar und wird zwischen den Aufnahmeflächen 22 spielfrei gehalten, wie in den Figuren 3A bis 3C dargestellt. Bei diesem ersten Ausführungsbeispiel des Implantatbohrers 10 ist das Bohrklingenelement 14 zur unlösbaren Verbindung mit der Haltevorrichtung 12 vorgesehen, hierfür wird der Halteabschnitt 18 des Bohrklingenelements 14 mit den Aufnahmeflächen 22 der Haltevorrichtung 12 verschweißt (vorzugsweise mittels Laserschweißen).

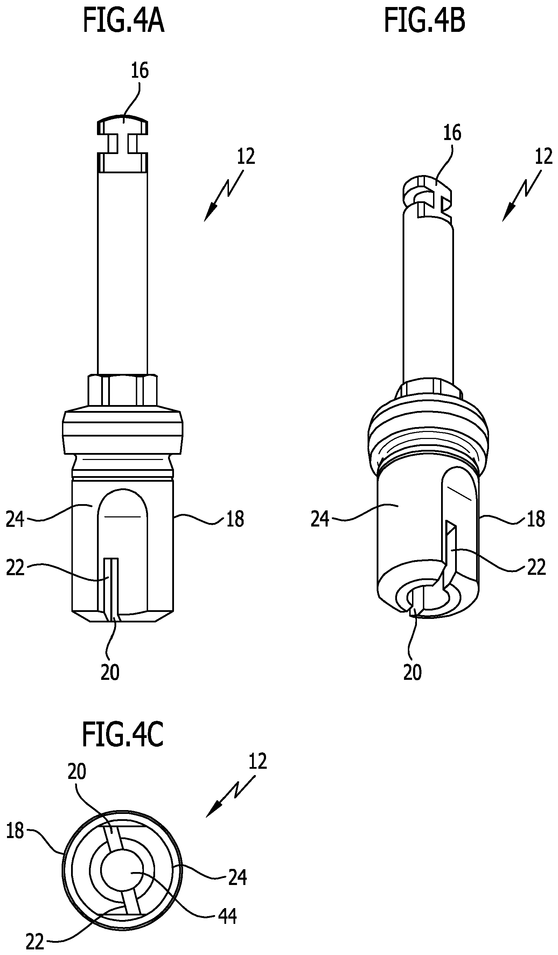

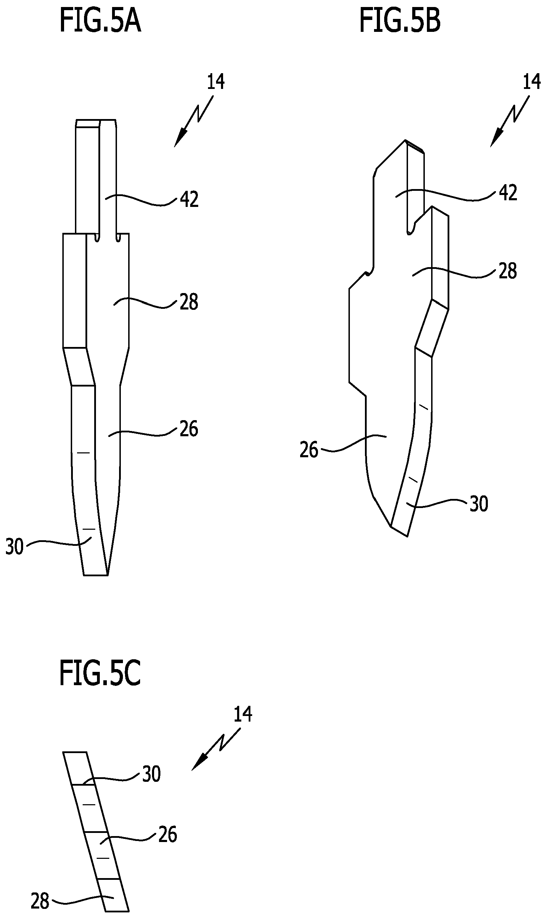

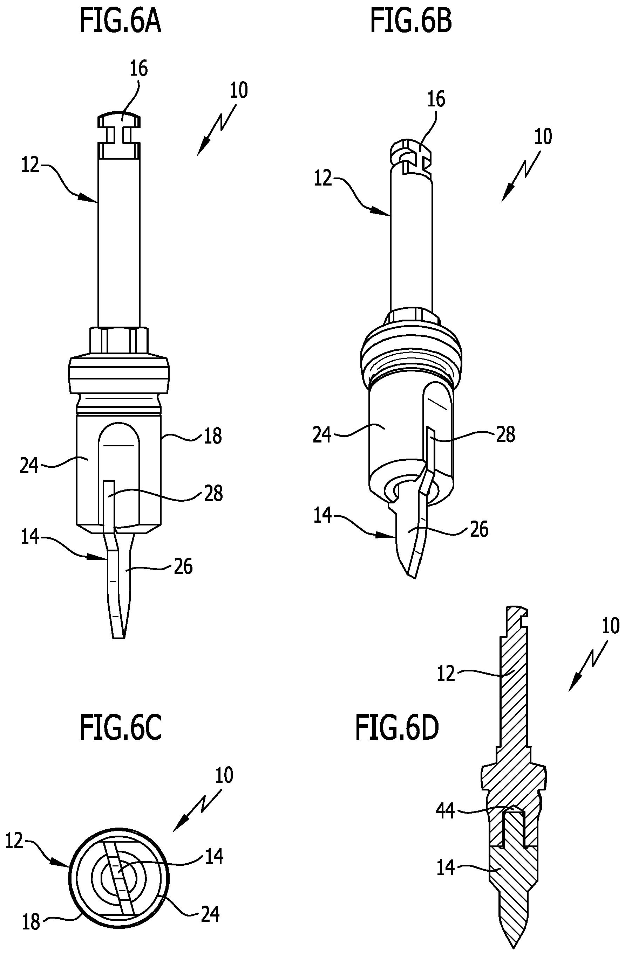

Ein zweites, nicht erfindungsgemäßes Ausführungsbeispiel eines Implantatbohrers 40 ist den Figuren 4A bis 6C dargestellt, wobei die Figuren 4A bis 4C lediglich die Haltevorrichtung 12 zeigen, die Figuren 5A bis 5C lediglich das Bohrklingenelement 14 und die Figuren 6A bis 6D den Implantatbohrer 40 umfassend das Bohrklingenelement 14 und die Haltevorrichtung 12. Gleiche oder einander entsprechende Elemente sind jeweils mit demselben Bezugszeichen versehen wie in den Figuren 1A bis 3C des ersten Ausführungsbeispiels.

Der Implantatbohrer 40 des zweiten Ausführungsbeispiels unterscheidet sich vom Implantatbohrer 10 des ersten Ausführungsbeispiels dadurch, dass das Bohrklingenelement 14 nicht aus hochfestem Edelstahl, sondern aus einem keramischen Material hergestellt ist. Das Bohrklingenelement 14 ist mit der Haltevorrichtung 12 auch in diesem Fall unlösbar verbunden, wobei diese Verbindung insbesondere durch Verkleben hergestellt wird.

Zur Optimierung der Klebeverbindung weist der Verbindungsabschnitt 28 des keramischen Bohrklingenelements 14 eine abweichende Geometrie auf, nämlich einen Abschnitt 42 mit geringerer Breite als der übrige Verbindungsabschnitt 28. Der Abschnitt 42 greift beim Verbinden des Bohrklingenelements 14 mit der Haltevorrichtung 12 in eine korrespondierende Aufnahme 44 im Halteabschnitt 18 der Haltevorrichtung 12 ein, die sich oberhalb der schlitzförmigen Aufnahme 20 erstreckt (siehe Figur 6D).

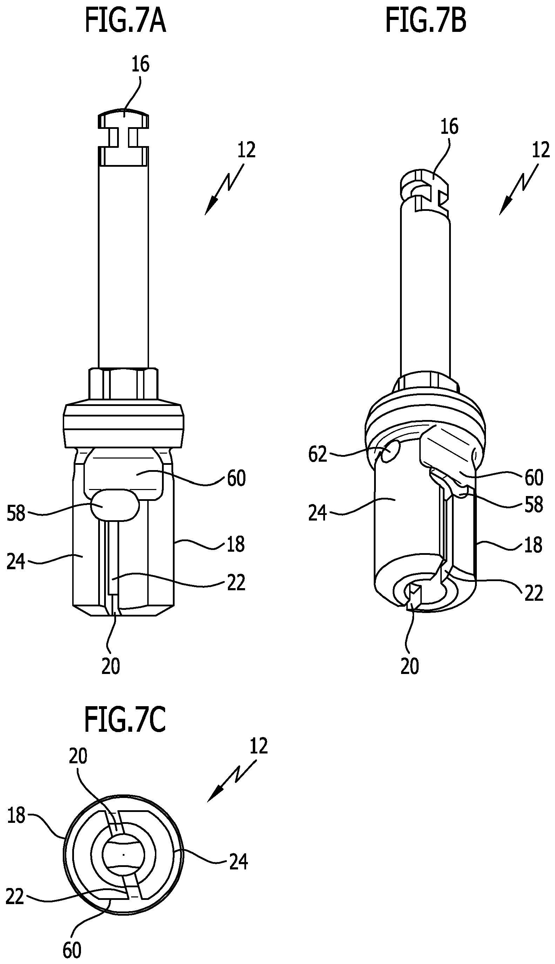

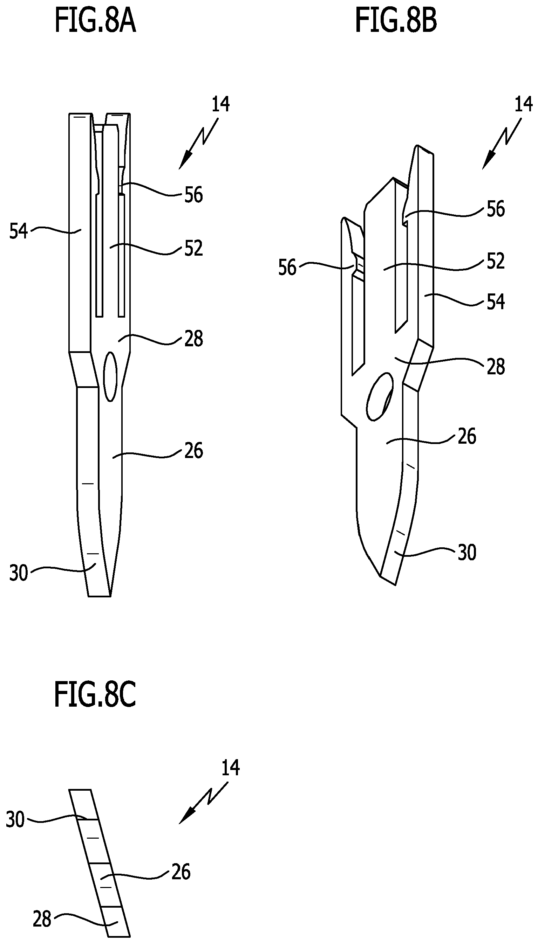

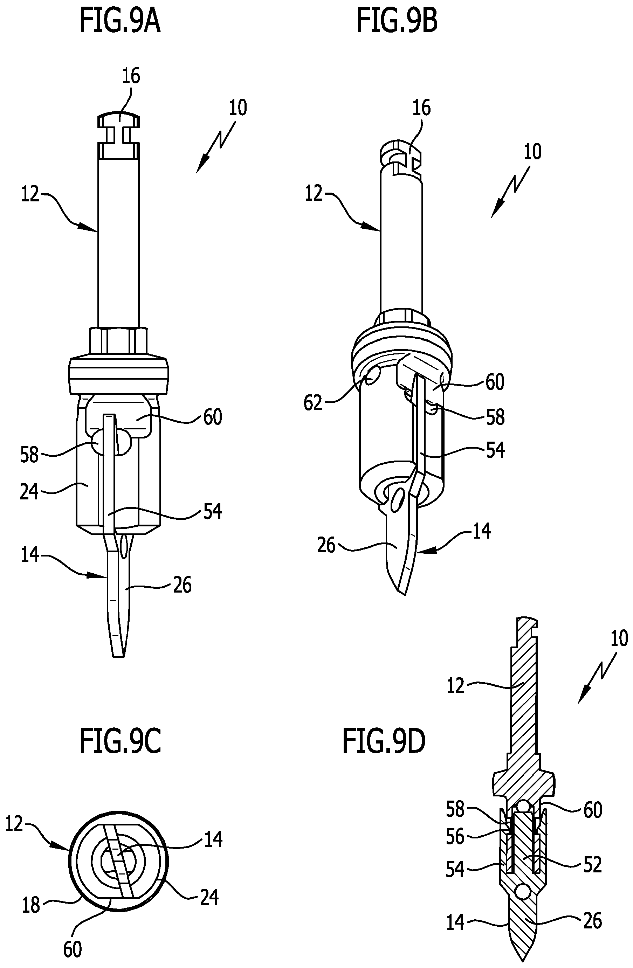

Ein drittes Ausführungsbeispiel eines erfindungsgemäßen Implantatbohrers 50 ist in den Figuren 7A bis 9D dargestellt, wobei die Figuren 7A bis 7C lediglich die Haltevorrichtung 12 zeigen, die Figuren 8A bis 8C lediglich das Bohrklingenelement 14 und die Figuren 9A bis 9D den Implantatbohrer 50 umfassend die Haltevorrichtung 12 und das Bohrklingenelement 14. Gleiche oder einander entsprechende Elemente sind jeweils mit demselben Bezugszeichen versehen wie in den Figuren 1A bis 3D des ersten Ausführungsbeispiels und den Figuren 4A bis 6D des zweiten Ausführungsbeispiels.

Bei dem dritten Ausführungsbeispiel des Implantatbohrers 50 ist eine lösbare Verbindung zwischen der Haltevorrichtung 12 und dem Bohrklingenelement 14 vorgesehen, die in diesem Fall über eine mechanische Rastverbindung realisiert wird. Das Bohrklingenelement 14 ist wie im Fall des ersten Ausführungsbeispiels aus einem hochfesten Edelstahl, insbesondere Chirurgenstahl, hergestellt.

Zur Ausbildung des Rastmechanismus weist der Verbindungsabschnitt 28 des Bohrklingenelements 14 einen zentralen Führungsabschnitt 52 und zwei seitliche Flügelabschnitte 54 auf, die von dem Führungsabschnitt 52 beabstandet sind. Jeder Flügelabschnitt 54 weist eine zur Drehachse hin orientierte Rastnase 56 auf.

In dem Halteabschnitt 18 der Haltevorrichtung 12 des Implantatbohrers 50 erstreckt sich die schlitzförmige Aufnahme 20 nicht über den gesamten Durchmesser des Halteabschnitts 18, sondern weist eine Breite auf, die im Wesentlichen der Breite des zentralen Führungsabschnitts 42 des Bohrklingenelements 14 entspricht. Der Halteabschnitt 18 weist an seinem Außenumfang zwei gegenüber liegende Aussparungen 58 zur Aufnahme der Rastnasen 56 auf. Beim Einführen des Verbindungsabschnitts 28 des Bohrklingenelements 14 in die schlitzförmige Aufnahme 20 der Haltevorrichtung 12 wird auf diese Weise die Rastverbindung hergestellt. Das Bohrklingenelement 14 ist dann drehfest mit der Haltevorrichtung 12 verbunden und gegen eine axiale oder radiale Bewegung gesichert.

Zum Lösen der Verbindung zwischen dem Bohrklingenelement 14 und der Haltevorrichtung 12 muss die Rastverbindung durch Bewegung der Flügelabschnitte 54 nach außen gelöst werden. Dies erfolgt günstigerweise mit Hilfe eines Entriegelungswerkzeugs. Der Halteabschnitt 18 der Haltevorrichtung 12 weist angrenzend an die Aussparungen 58 jeweils eine Anlagefläche 60 für ein solches Entriegelungswerkzeug auf. Dieses wird entlang der Anlagefläche 60 nach unten bewegt, um die Flügelabschnitte 54 nach außen zu drücken und die Verbindung zwischen dem Bohrklingenelement 14 und der Haltevorrichtung 12 zu lösen.

Die Haltevorrichtung 12 des Implantatbohrers 50 weist zusätzlich eine Reinigungsbohrung 62 auf, die das in Richtung des Betätigungsabschnitts 16 weisende Ende der schlitzförmigen Aufnahme 20 mit dem Außenumfang 24 des Halteabschnitts 18 verbindet. Dadurch kann eine effektive Durchspülung der schlitzförmigen Aufnahme 20 beim Reinigen der Haltevorrichtung 12 sichergestellt werden.

Die Haltevorrichtung 12 des Implantatbohrers 50 gemäß dem dritten Ausführungsbeispiel eignet sich als Bestandteil eines erfindungsgemäßen Implantatbohrer-Satzes. Ein solcher Implantatbohrer-Satz kann eine Mehrzahl von verschiedenen Bohrklingenelementen 14 umfassen, deren Verbindungsabschnitte 28 jeweils gleich ausgebildet sind zur Verbindung mit der Haltevorrichtung 12, die jedoch verschiedene Klingenabschnitte 26 aufweisen, um nacheinander verschiedene Teilbereiche einer Bohrung im Kieferknochen zu erzeugen und/ oder aufzuweiten, oder um Bohrungen für verschiedene Dentalimplantate erzeugen zu können.

Der erfindungsgemäße Implantatbohrer-Satz ermöglicht eine deutliche Material- und Kostenersparnis um Vergleich zu Implantatbohrer-Sätzen, die jeweils einstückige Implantatbohrer umfassen.

### Bezugszeichenliste

- 10: Implantatbohrer
- 12: Haltevorrichtung
- 14: Bohrklingenelement
- 16: Betätigungsabschnitt
- 18: Halteabschnitt
- 20: schlitzförmige Aufnahme
- 22: Aufnahmefläche
- 24: zylindrische Außenfläche
- 26: Klingenabschnitt
- 28: Verbindungsabschnitt
- 30: abgeschrägten Kanten
- 40: Implantatbohrer
- 42: Abschnitt mit geringerer Breite
- 44: Aufnahme
- 50: Implantatbohrer
- 52: zentraler Führungsabschnitt
- 54: seitliche Flügelabschnitte
- 56: Rastnasen
- 58: Aussparungen
- 60: Anlagefläche
- 62: Reinigungsbohrung

## Patentansprüche

1. Implantatbohrer (10; 40; 50) zur Erzeugung von Bohrungen im Kieferknochen für Dentalimplantate, umfassend
- ein Bohrklingenelement (14), das aus einem Flachmaterial besteht und im Wesentlichen spiegelsymmetrisch in Bezug auf eine Drehachse des Implantatbohrers ausgebildet ist, umfassend einen Klingenabschnitt (26) mit abgeschrägten Kanten (30) zur Erzeugung der Bohrung im Kieferknochen und einen Verbindungsabschnitt (28), die in Axialrichtung an entgegengesetzten Enden des Bohrklingenelements angeordnet sind; und
- ein Haltevorrichtung (12), die im Wesentlichen rotationssymmetrisch in Bezug auf die Drehachse ausgebildet ist, wobei die Haltevorrichtung einen Halteabschnitt (18) und einen Betätigungsabschnitt (16) umfasst, die in Axialrichtung an entgegengesetzten Enden der Haltevorrichtung angeordnet sind, und wobei der Halteabschnitt eine schlitzförmige, in Bezug auf die Drehachse spiegelsymmetrische Aufnahme (20) mit zwei zueinander parallelen Aufnahmeflächen (22) aufweist,
wobei der Verbindungsabschnitt des Bohrklingenelements in Axialrichtung in die Aufnahme des Halteabschnitts der Haltevorrichtung einführbar ist, um das Bohrklingenelement drehfest mit der Haltevorrichtung zu verbinden,
**dadurch gekennzeichnet, dass** das Bohrklingenelement mittels einer Rast- oder Schnappverbindung lösbar mit der Haltevorrichtung verbindbar ist.

2. Implantatbohrer (10; 40; 50) nach Anspruch 1, wobei der Halteabschnitt (18) eine zylindrische Außenfläche (24) aufweist zur Aufnahme in einer Bohrhülse mit einer korrespondierenden zylindrischen Innenfläche.

3. Implantatbohrer (10; 40; 50) nach Anspruch 1 oder 2, wobei die Haltevorrichtung (12) aus Edelstahl gebildet ist.

4. Implantatbohrer (10; 40; 50) nach einem der vorhergehenden Ansprüche, wobei das Bohrklingenelement (14) einstückig aus einem keramischen Material oder aus einem metallischen Material gebildet ist, insbesondere aus hochfestem Edelstahl oder Chirurgenstahl.

5. Implantatbohrer (10; 40; 50) nach einem der vorhergehenden Ansprüche, wobei das Bohrklingenelement (14) mittels Erodierens hergestellt ist, insbesondere mittels Funkenerodieren.

6. Implantatbohrer (10; 40; 50) nach einem der vorhergehenden Ansprüche, wobei das Bohrklingenelement (14) eine im Wesentlichen konstante Dicke aufweist, bevorzugt im Bereich von ca. 0,25 bis ca. 0,8 mm, weiter bevorzugt von ca. 0,5 bis ca. 0,7 mm aufweist; und/oder wobei die Aufnahmeflächen (22) der schlitzförmigen Aufnahme (20) in dem Halteabschnitt (18) einen Abstand aufweisen, welcher der Dicke des Bohrklingenelements (14) entspricht, um den Verbindungsabschnitt (28) des Bohrklingenelements im Wesentlichen spielfrei aufzunehmen.

7. Implantatbohrer (10; 40; 50) nach einem der vorhergehenden Ansprüche, wobei der Betätigungsabschnitt (16) zur drehfesten, lösbaren Verbindung mit einem Handgriff ausgebildet ist.

8. Implantatbohrer (50) nach einem der vorhergehenden Ansprüche, wobei der Verbindungsabschnitt (28) des Bohrklingenelements (14) einen zentralen Führungsabschnitt (52) und zwei seitliche, von dem Führungsabschnitt beabstandete Flügelabschnitte (54) aufweist, wobei die Flügelabschnitte jeweils eine zur Drehachse hin orientierte Rastnase (56) aufweisen, wobei sich die schlitzförmige Aufnahme (20) nicht über den gesamten Durchmesser des Halteabschnitts (18) erstreckt, sondern eine Breite aufweist, die im Wesentlichen der Breite des zentralen Führungsabschnitts entspricht, und wobei der Halteabschnitt an seinem Außenumfang (24) zwei gegenüber liegende Aussparungen (58) zur Aufnahme der Rastnasen aufweist.

9. Implantatbohrer (50) nach Anspruch 8, wobei der Halteabschnitt (18) angrenzend an die Aussparungen (58) jeweils eine Anlagefläche (60) für ein Entriegelungswerkzeug aufweist, um die seitlichen Flügelabschnitte (54) auseinander zu bewegen und die Verbindung zwischen dem Bohrklingenelement (14) und der Haltevorrichtung (12) zu lösen.

10. Implantatbohrer (50) nach einem der vorhergehenden Ansprüche, wobei die Haltevorrichtung (12) eine Reinigungsbohrung (62) aufweist, die das in Richtung des Betätigungsabschnitts (16) weisende Ende der schlitzförmigen Aufnahme (20) mit dem Außenumfang (24) des Halteabschnitts (18) verbindet.

11. Implantatbohrer-Satz, umfassend einen Implantatbohrer (50) nach einem der vorhergehenden Ansprüche und ein oder mehrere weitere Bohrklingenelemente (14), wobei jedes Bohrklingenelement einen Verbindungsabschnitt (28) aufweist, der in Axialrichtung in die Aufnahme (20) des Halteabschnitts (18) des Haltevorrichtung (12) einführbar ist, um das Bohrklingenelement drehfest mit der Haltevorrichtung zu verbinden.

12. Implantatbohrer-Satz nach Anspruch 11, wobei die Verbindungsabschnitte (28) aller Bohrklingenelemente (14) gleich ausgebildet sind, und wobei die Klingenabschnitte (26) der Bohrklingenelemente gleich oder verschieden ausgebildet sind, wobei bevorzugt die Klingenabschnitte (26) der Bohrklingenelemente (14) verschieden ausgebildet sind, um nacheinander verschiedene Teilbereiche einer Bohrung im Kieferknochen zu erzeugen und/oder aufzuweiten.

## Claims

1. Implant drill (10; 40; 50) for producing bores in the jaw bone for dental implants, comprising
- a drill blade element (14) which consists of a flat material and is configured substantially mirror-symmetrical relative to a rotation axis of the implant drill, comprising a blade portion (26) with bevelled edges (30) for producing the bore in the jaw bone and a connecting portion (28), which are arranged in the axial direction at opposite ends of the drill blade element; and
- a holding apparatus (12) which is configured substantially rotationally symmetrical relative to the rotation axis, wherein the holding apparatus comprises a holding portion (18) and an actuating portion (16), which are arranged in the axial direction at opposite ends of the holding apparatus, and wherein the holding portion has a slot-shaped receptacle (20) that is mirror-symmetrical relative to the rotation axis, with two mutually parallel receptacle surfaces (22),
wherein the connecting portion of the drill blade element is introducible in the axial direction into the receptacle of the holding portion of the holding apparatus, in order to connect the drill blade element non-rotatably to the holding apparatus,
**characterized in that** the drill blade element is releasably connectable to the holding apparatus by means of a latching connection or snap-fit connection.

2. Implant drill (10; 40; 50) according to claim 1, wherein the holding portion (18) has a cylindrical outer surface (24) to be received in a drilling sleeve with a corresponding cylindrical inner surface.

3. Implant drill (10; 40; 50) according to claim 1 or 2, wherein the holding apparatus (12) is made from high-grade steel.

4. Implant drill (10; 40; 50) according to one of the preceding claims, wherein the drill blade element (14) is formed integrally from a ceramic material or a metallic material, in particular, from high-strength high-grade steel or surgical steel.

5. Implant drill (10; 40; 50) according to one of the preceding claims, wherein the drill blade element (14) is produced by means of eroding, in particular, by means of spark eroding.

6. Implant drill (10; 40; 50) according to one of the preceding claims, wherein the drill blade element (14) has a substantially constant thickness, preferably in the range from approximately 0.25 to approximately 0.8 mm, more preferably from approximately 0.5 to approximately 0.7 mm; and/or wherein the receptacle surfaces (22) of the slot-shaped receptacle (20) in the holding portion (18) have a spacing that corresponds to the thickness of the drill blade element (14) in order to receive the connecting portion (28) of the drill blade element substantially play-free.

7. Implant drill (10; 40; 50) according to one of the preceding claims, wherein the actuating portion (16) is configured for non-rotatable, releasable connection to a handle.

8. Implant drill (50) according to one of the preceding claims, wherein the connecting portion (28) of the drill blade element (14) has a central guide portion (52) and two lateral wing portions (54) spaced from the guide portion, wherein the wing portions each have a latching nose (56) oriented toward the rotation axis, wherein the slot-shaped receptacle (20) does not extend over the whole diameter of the holding portion (18), but rather has a width that substantially corresponds to the width of the central guide portion, and wherein the holding portion has two recesses (58) disposed opposite one another on its outer periphery (24) for receiving the latching noses.

9. Implant drill (50) according to claim 8, wherein, adjoining each of the recesses (58), the holding portion (18) has a respective contact surface (60) for an unlocking tool, in order to move the lateral wing portions (54) apart and to release the connection between the drill blade element (14) and the holding apparatus (12).

10. Implant drill (50) according to one of the preceding claims, wherein the holding apparatus (12) has a cleaning bore (62) which connects the end of the slot-shaped receptacle (20) orientated in the direction of the actuating portion (16) to the outer periphery (24) of the holding portion (18).

11. Implant drill set comprising an implant drill (50) according to one of the preceding claims and one or more further drill blade elements (14), wherein each drill blade element has a connecting portion (28) which is introducible in the axial direction into the receptacle (20) of the holding portion (18) of the holding apparatus (12), in order to connect the drill blade element non-rotatably to the holding apparatus.

12. Implant drill set according to claim 11, wherein the connecting portions (28) of all the drill blade elements (14) are configured identically, and wherein the blade portions (26) of the drill blade elements are configured identically or differently, wherein preferably the blade portions (26) of the drill blade elements (14) are configured differently, in order to produce and/or widen different partial regions of a bore in the jaw bone sequentially.

## Revendications

1. Foret d'implant (10 ; 40 ; 50) destiné à créer des trous de forage dans l'os de la mâchoire pour des implants dentaires, comprenant
- un élément de lame de forage (14), qui est constitué d'un matériau plat et est réalisé sensiblement avec une symétrie en miroir par rapport à un axe de rotation du foret d'implant, comprenant une section de lame (26) avec des bords biseautés (30) pour créer le trou de forage dans l'os de la mâchoire et une section de liaison (28), lesquelles sont disposées dans la direction axiale sur des extrémités opposées de l'élément de lame de forage ; et
- un dispositif de maintien (12), qui est réalisé sensiblement avec une symétrie de rotation par rapport à l'axe de rotation, dans lequel le dispositif de maintien comprend une section de maintien (18) et une section d'actionnement (16), qui sont disposées dans la direction axiale sur des extrémités opposées du dispositif de maintien, et dans lequel la section de maintien présente un réceptacle (20) en forme de fente à symétrie en miroir par rapport à l'axe de rotation avec deux surfaces de réception (22) parallèles l'une à l'autre,
dans lequel la section de liaison de l'élément de lame de forage peut être introduite dans la direction axiale dans le réceptacle de la section de maintien du dispositif de maintien pour relier de manière solidaire en rotation l'élément de lame de forage au dispositif de maintien,
**caractérisé en ce que** l'élément de lame de forage peut être relié de manière amovible au dispositif de maintien au moyen d'une liaison à enclenchement ou à encliquetage.

2. Foret d'implant (10 ; 40 ; 50) selon la revendication 1, dans lequel la section de maintien (18) présente une surface extérieure cylindrique (24) destinée à être reçue dans un manchon de forage avec une surface intérieure cylindrique correspondante.

3. Foret d'implant (10 ; 40 ; 50) selon la revendication 1 ou 2, dans lequel le dispositif de maintien (12) est formé à partir d'acier inoxydable.

4. Foret d'implant (10 ; 40 ; 50) selon l'une quelconque des revendications précédentes, dans lequel l'élément de lame de forage (14) est formé d'une seule pièce à partir d'un matériau céramique ou d'un matériau métallique, en particulier à partir d'acier inoxydable à haute résistance ou d'acier chirurgical.

5. Foret d'implant (10 ; 40 ; 50) selon l'une quelconque des revendications précédentes, dans lequel l'élément de lame de forage (14) est fabriqué par érosion, en particulier par érosion par étincelles.

6. Foret d'implant (10 ; 40 ; 50) selon l'une quelconque des revendications précédentes, dans lequel l'élément de lame de forage (14) présente une épaisseur sensiblement constante, de préférence dans la plage d'environ 0,25 à environ 0,8 mm, de manière davantage préférée d'environ 0,5 à environ 0,7 mm ; et/ou dans lequel les surfaces de réception (22) du réceptacle en forme de fente (20) dans la section de maintien (18) présentent une distance qui correspond à l'épaisseur de l'élément de lame de forage (14) pour recevoir la section de liaison (28) de l'élément de lame de forage sensiblement sans jeu.

7. Foret d'implant (10 ; 40 ; 50) selon l'une quelconque des revendications précédentes, dans lequel la section d'actionnement (16) est réalisée avec une poignée pour une liaison amovible solidaire en rotation.

8. Foret d'implant (50) selon l'une quelconque des revendications précédentes, dans lequel la section de liaison (28) de l'élément de lame de forage (14) présente une section de guidage centrale (52) et deux sections d'aile latérales (54) espacées de la section de guidage, dans lequel les sections d'aile présentent chacune un ergot d'enclenchement (56) orienté vers l'axe de rotation, dans lequel le réceptacle en forme de fente (20) ne s'étend pas sur tout le diamètre de la section de maintien (18), mais présente une largeur, qui correspond sensiblement à la largeur de la section de guidage centrale, et dans lequel la section de maintien présente sur sa périphérie extérieure (24) deux évidements (58) opposés destinés à recevoir les ergots d'enclenchement.

9. Foret d'implant (50) selon la revendication 8, dans lequel la section de maintien (18) présente de manière adjacente aux évidements (58) respectivement une surface d'appui (60) pour un outil de déverrouillage pour écarter les sections d'aile latérales (54) et desserrer la liaison entre l'élément de lame de forage (14) et le dispositif de maintien (12).

10. Foret d'implant (50) selon l'une quelconque des revendications précédentes, dans lequel le dispositif de maintien (12) présente un trou de forage de nettoyage (62), qui relie l'extrémité, pointant dans la direction de la section d'actionnement (16), du réceptacle en forme de fente (20) à la périphérie extérieure (24) de la section de maintien (18).

11. Ensemble de foret d'implant comprenant un foret d'implant (50) selon l'une quelconque des revendications précédentes et un ou plusieurs autres éléments de lame de forage (14), dans lequel chaque élément de lame de forage présente une section de liaison (28), qui peut être introduite dans la direction axiale dans le réceptacle (20) de la section de maintien (18) du dispositif de maintien (12) pour relier de manière solidaire en rotation l'élément de lame de forage au dispositif de maintien.

12. Ensemble de forets d'implant selon la revendication 11, dans lequel les sections de liaison (28) de tous les éléments de lame de forage (14) sont de forme identique, et dans lequel les sections de lame (26) des éléments de lame de forage sont de forme identique ou différente, dans lequel de manière préférée les sections de lame (26) des éléments de lame de forage (14) sont de forme différente pour créer et/ou élargir successivement différentes zones partielles d'un trou de forage dans l'os de la mâchoire.
